# EUROPEAN PATENT APPLICATION

(11) **EP 2 990 250 A1**
(43) Date of publication of application: **02.03.2016**
(21) Application number: 13883014.6
(22) Date of filing: 22.04.2013
(51) Int. Cl.: B60K 35/00, B60R 16/02, G01D 7/00, G01P 1/08, G02B 27/01, G09F 9/00

(54) **VEHICULAR HEAD-UP DISPLAY DEVICE**

(71) Applicant: TOYOTA JIDOSHA KABUSHIKI KAISHA, Toyota-shi, Aichi 471-8571 (JP)
(72) Inventor: WATANABE, Masaya, Toyota-shi Aichi 471-8571 (JP)
(74) Representative: TBK
(86) International application number: PCT/JP2013/061790
(87) International publication number: WO 2014/174575

(57) **Abstract**

A head-up display apparatus for a vehicle is configured to output a display that has a convex shape in an upward direction as a whole such that a width of the display in a left/right direction, when the display is viewed from a predetermined view point, indicates a width of the vehicle. The image includes a meter that indicates an amount of a predetermined parameter.

## Description

### Technical Field

The disclosure is related to a head-up display apparatus for a vehicle.

### Background Art

A traveling trajectory control support apparatus is known that displays a marking as a future traveling trajectory image for supporting a driver such that the marking can be viewed via a front glass by the driver who sees a road (see Patent Document 1, for example).

[Patent Document 1] Japanese Laid-open Patent Publication No. 2007-512636

### Disclosure of Invention

### Problem to be Solved by Invention

However, the image (i.e., the marking) according to Patent Document 1 does not include information about a width of a vehicle. Thus, there is a problem that the image does not function effectively as a drive support with respect to a driver whose sense of a width of the vehicle is not well developed.

Therefore, an object of the disclosure is to provide a head-up display apparatus for a vehicle that can perform a drive support such that an appropriate sense of a width of the vehicle is given to a driver.

### Means to Solve the Problem

According to one aspect of the disclosure, a head-up display apparatus for a vehicle is provided, wherein the head-up display apparatus is configured to output a display that has a convex shape in an upward direction as a whole such that a width of the display in a left/right direction, when the display is viewed from a predetermined view point, indicates a width of the vehicle.

### Advantage of the Invention

According to the disclosure, a head-up display apparatus for a vehicle can be obtained that can perform a drive support such that an appropriate sense of a width of the vehicle is given to a driver.

### Brief Description of Drawings

Fig. 1 is a diagram illustrating an example of a system configuration of a head-up display apparatus 10.
Fig. 2 is a cross-sectional view schematically illustrating an example of a cross-section of a HUD unit 40.
Fig. 3 is a diagram schematically illustrating an example of a displayed state of a drive support image 70 displayed by the HUD unit 40.
Fig. 4 is a diagram schematically illustrating an example of a displayed state of the drive support image 70 according to a lateral position of a vehicle with respect to a lane marker.
Fig. 5 is a diagram illustrating variations of the drive support image 70.
Fig. 6 is a diagram schematically illustrating an example of the displayed states of the drive support image 70 for a curved road.
Fig. 7 is a diagram schematically illustrating an example of the displayed state (movement manner) of the drive support image 70 according to a steering angle.
Fig. 8 is a diagram schematically illustrating an example of the displayed state (movement manner) of the drive support image 70 according to a vehicle speed.
Fig. 9 is an example of a flowchart of a process executed by an ECU 12.

### Description of Reference Symbols

10 head-up display apparatus
12 ECU
30 steering angle sensor
32 vehicle speed sensor
40 HUD unit
42 display device
44 concave mirror
70 (70A, 70B, 70C) drive support image
72 state image

### Best Mode for Carrying Out the Invention

In the following, embodiments are described in detail with reference to appended drawings.

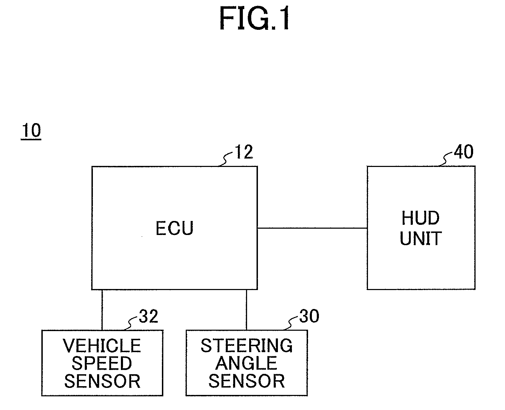

Fig. 1 is a diagram illustrating an example of a system configuration of a head-up display apparatus 10. The head-up display apparatus 10 includes an electronic control unit 12 (referred to as "ECU 12", hereinafter). The operation of the head-up display apparatus 10 is controlled by the ECU 12. The ECU 12 includes a microprocessor that includes a CPU, a ROM, a RAM, etc., which are interconnected via buses (not illustrated). In the ROM are stored the computer readable programs to be carried out by the CPU. Functions of the ECU 12 (including functions described hereinafter) may be implemented by any hardware, any software, any firmware or any combination thereof. For example, any part of or all the functions of the ECU 12 may be implemented by an ASIC (application-specific integrated circuit), a FPGA (Field Programmable Gate Array) or a DSP (digital signal processor). Further, the ECU 12 may be implemented by a plurality of ECUs.

The ECU 12 is coupled to a steering sensor 30 that detects a steering angle of a steering wheel (not illustrated). An output signal (steering information) of the steering sensor 30 is transmitted to the ECU 12. The ECU 12 may calculate the steering angle from the steering angle value of the steering sensor 30 based on a nominal steering angle (i.e., the steering angle value when the vehicle travels in a straight line) stored in the ROM, etc.

The ECU 12 is coupled to a vehicle speed sensor 32 that detects the vehicle speed. The vehicle speed sensor 32 outputs an electric signal according to rotational speed of vehicle wheels (vehicle speed pulses). An output signal (vehicle speed information) of the vehicle speed sensor 32 is transmitted to the ECU 12. The ECU 12 may calculate the vehicle speed based on the output signal of the vehicle speed sensor 32. Further, the ECU 12 may obtain vehicle speed information from other ECUs (the vehicle speed information from an ABS (antilock brake system), for example). Further, the ECU 12 may calculates the vehicle speed from a rpm of an output shaft of a transmission, instead of the vehicle speed sensor 32.

The ECU 12 is coupled to an HUD (Head-Up Display) unit 40. The HUD unit 40 outputs a drive support image described hereinafter based on an image signal from the ECU 12. The drive support image generated by the HUD unit 40 is described hereinafter in detail.

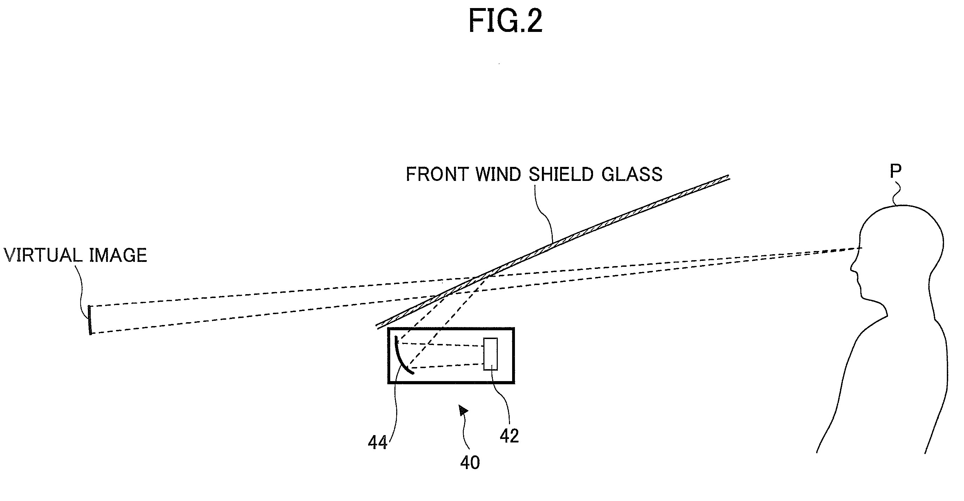

Fig. 2 is a cross-sectional view schematically illustrating an example of a cross-section of the HUD unit 40. The HUD unit 40 is provided in an instrument panel, as illustrated in Fig. 2, for example.

The HUD unit 40 includes a display device (projector) 42. The display device 42 generates visible light rays (display light) for transmitting information to a driver. The display light is generated according to an image signal from the ECU 12. It is noted that a configuration of the display device 42 may be arbitrary. The display device 42 may be a dot-matrix VFD (Vacuum Fluorescent Display), for example.

The display device 42 generates the display light related to the drive support image 70 described hereinafter in detail. Further, the display device 42 may project the display light including information (i.e., front circumstance information) that is included in a video signal received from an infrared camera (not illustrated) that captures a scene in front of the vehicle. Further, the display device 42 may project the display light for transmitting navigation information from a navigation apparatus. Further, the display device 42 may project the display light for transmitting meter information (vehicle speed information, etc., for example) from a navigation apparatus. Further, the display device 42 may project the display light for transmitting information about states of an air conditioner, an audio apparatus, etc.

The display light emitted from the display device 42 reaches an image projection surface of a front wind shield glass. The display light is diffracted by the image projection surface of the front wind shield glass toward a viewer P (a driver, in particular) such that an image (virtual image) is generated in front of the viewer P. It is noted that in Fig. 2 a projection range (optical path) of the display light viewed from the viewer P (precisely, a position P of eyes of the viewer P) is illustrated in a dotted line. It is noted that, in the example illustrated in Fig. 2, the HUD unit 40 includes a concave mirror 44, and the display light from the display device 42 is reflected at the concave mirror 44 to reach the front wind shield glass. The display light may be converted to an enlarged image by the concave mirror 44 according to a curvature of the front wind shield glass.

It is noted that a combiner may be provided on the front wind shield glass. The combiner may be of arbitrary type. For example, the combiner may be formed of a half mirror or may be a holographic combiner using a hologram. In the case of the holographic combiner, the hologram may be inserted between layers of the front wind shield glass. Further, the combiner may be formed of a reflective film evaporated on a surface of glass on the side thereof to which another glass is bonded to form layers of the front wind shield glass. Alternatively, the combiner may not be provided on or in the image projection surface of the front wind shield glass. In this case, the front wind shield glass may have an intermediate film (inserted between the glass layers) with varied thickness in order to prevent double images (i.e., an image that can be viewed as if it were double due to the reflections at the front and back surfaces of the front wind shield glass). For example, the intermediate film may have the thickness that gradually reduces from the upper side to the lower side of the front wind shield glass (i.e., a wedge shaped cross section).

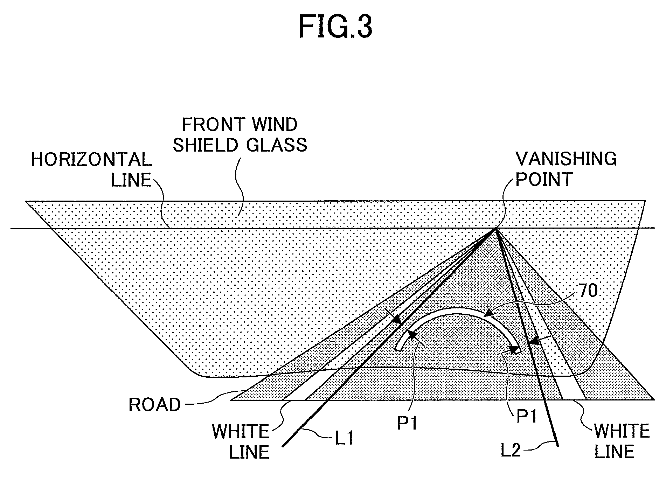

Fig. 3 is a diagram schematically illustrating an example of a drive support image 70 displayed by the HUD unit 40. It is noted that Fig. 3 illustrates a displayed state of the drive support image 70 from a predetermined view point. In Fig. 3, a scene (actual image) viewed from the driver includes two white lines and a horizontal line. Two left and right lines L1 and L2 are neither actual images nor displayed images. The lines L1 and L2 are illustrated for the purpose of explanation. An arrow P1 is not a displayed image, and is also illustrated for the purpose of explanation.

The drive support image 70 is an image extending in a left/right direction, as illustrated in Fig. 3. The drive support image 70 is output such that a width of the drive support image 70 in the left/right direction indicates a width of the vehicle when the drive support image 70 is viewed from a predetermined view point. The predetermined view point is arbitrary. Typically, the view point of the driver is assumed as the predetermined view point. The view point of the driver differs according to a height, a driving position of the driver, etc. Thus, the predetermined view point may be set based on a representative height and a representative driving position of the driver. Alternatively, the predetermined view point may be set for each of a plurality of heights and driving positions of the driver. In the following, for the sake of reducing the complexity of the explanation, it is assumed that the predetermined view point is set based on the representative height and the representative driving position of the driver.

In Fig. 3, the two left and right lines L1 and L2 indicate the width of the vehicle. In other words, the two left and right lines L1 and L2 substantially correspond to trajectories (predicted trajectories) of left and right wheels of the vehicle. In this example, the two left and right lines L1 and L2 correspond to a case where the vehicle travels in a straight line at an ideal middle position between the left and right white lines on a straight road. In Fig. 3, the two left and right lines L1 and L2 are illustrated when viewed from the predetermined view point. The drive support image 70 may be output such that left and right ends thereof are inwardly away from the two left and right lines L1 and L2 by a predetermined distance P1, respectively. In this case, the drive support image 70 may be output at the midpoint between the two left and right lines L1 and L2 which are illustrated when viewed from the predetermined view point. With this arrangement, when the drive support image 70 is viewed from the predetermined view point, the lateral width of the drive support image 70 can indicate the width of the vehicle at a predetermined vehicle ahead position (i.e., the width of the vehicle when it is assumed that the vehicle reaches the predetermined vehicle ahead position, and viewed from the current predetermined view point). The drive support image 70 thus viewed in such a way can be generated in advance based on drawing data (a relationship between the predicted trajectories of the left and right wheels according to the steering angle and the predetermined view point, for example) on a CAD (Computer-Aided Design) tool, for example. In this case, portions that are used as a reference to determine the predetermined distance P1, of the predicted trajectories of the left and right wheels that extend forward toward an infinite-point, may be near the position of the virtual image, or may be forward with respect to the virtual image (near a position at which a line connecting from the predetermined view point to the virtual image, that is to say, a line of sight intersects with the road). In other words, the predetermined vehicle ahead position may be near the position of the virtual image, etc. It is noted that a fine-tuning of the output position of the drive support image 70 may be implemented by a fine-tuning of an angle of the concave mirror 44 or an output (pixel positions) of the display device 42. It is noted that the predetermined distance P1 may be arbitrary, as long as the lateral width of the drive support image 70 can suggest the width of the vehicle at the predetermined vehicle ahead position (near the position of the virtual image, etc.) (i.e., as long as the lateral width of the drive support image 70 gives an indication of the width of the vehicle). For example, the predetermined distance P1 may be 0, or slightly greater than 0. Further, the predetermined distance P1 may be slightly smaller than 0 (i.e., a negative value, and thus the left and right ends are outwardly away from the two left and right lines L1 and L2). It is noted that when the predetermined distance P1 is 0, the lateral width of the drive support image 70 indicates the width of the vehicle at the predetermined vehicle ahead position as well as the positions of the left and right wheels of the vehicle at the predetermined vehicle ahead position.

The drive support image 70 has a shape that is convex upward as a whole, as illustrated in Fig. 3. In other words, the drive support image 70 has a shape whose width becomes smaller as the position thereof moves upward. In the example illustrated in Fig. 3, the drive support image 70 is an arc shape whose center of a curvature is located on the lower side. It is noted that the arc shape is not necessarily a portion of a perfect circle, and may be an oval shape whose longitudinal axis extends in the lateral direction, for example.

According to the example illustrated in Fig. 3, since the drive support image 70 that is upwardly concave and horizontally oriented is displayed to correspond to the width of the vehicle, the driver can visually understand the width of the vehicle ahead of a line of sight of the driver. With this arrangement, the driver can learn to have an appropriate sense of the width of the vehicle and can visually understand a relative position of the host vehicle in the width direction with respect to the lane marker (the white line, for example).

It is noted that, preferably, the shape of the drive support image 70 is substantially symmetric with respect to the center thereof in the left/right direction, as illustrated in Fig. 3. Further, preferably, the drive support image 70 is output such that a line connecting the opposite ends thereof is parallel with the horizontal line, as illustrated in Fig. 3. With this arrangement, it becomes easier to visually understand the relative position of the host vehicle in the width direction with respect to the lane marker.

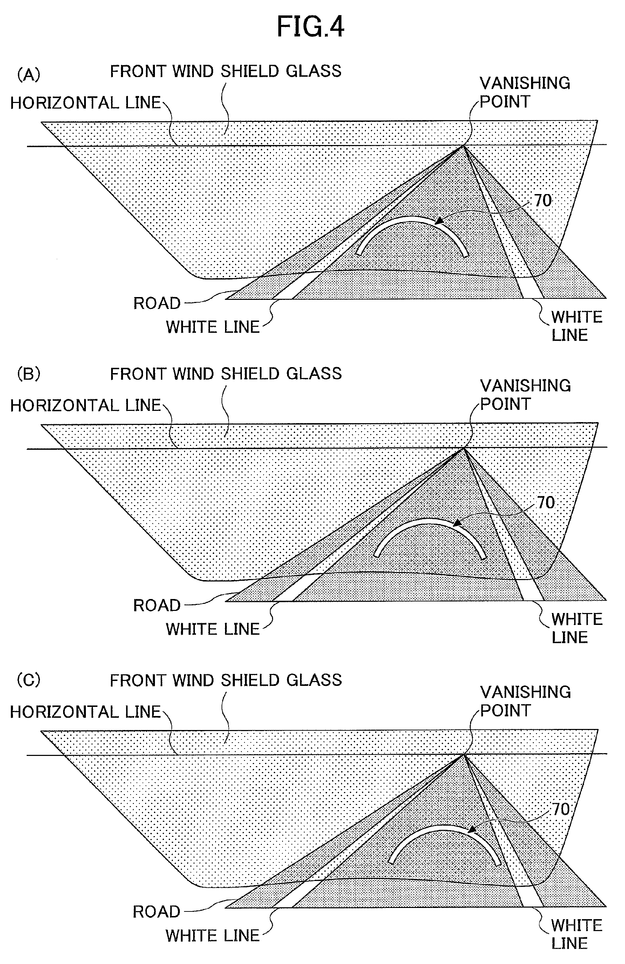

Fig. 4 is a diagram schematically illustrating an example of a displayed state of the drive support image 70 according to the lateral position of the vehicle with respect to the lane marker. In Fig. 4, (A) illustrates a way in which the drive support image 70 is viewed when the host vehicle is closer to the left side lane marker, (B) illustrates a way (corresponding to Fig. 3) in which the drive support image 70 is viewed when the host vehicle is at the middle position between the lane markers, and (C) illustrates a way in which the drive support image 70 is viewed when the host vehicle is closer to the right side lane marker. It is noted that Fig. 4 illustrates a displayed state (appearance) of the drive support image 70 from the predetermined view point.

For example, when the host vehicle is closer to the left side lane marker, the drive support image 70 is seen at a position closer to the left side lane marker correspondingly, when viewed from the predetermined view point, as illustrated in Fig. 4 (A). In other words, the drive support image 70 is seen such that the distance with respect to the left side lane marker is shorter than that with respect to the right side lane marker. With this arrangement, the driver can easily understand that the host vehicle travels at a position in the traveling lane that is closer to the left side lane marker.

Similarly, when the host vehicle is closer to the right side lane marker, the drive support image 70 is seen at a position closer to the right side lane marker correspondingly, when viewed from the predetermined view point, as illustrated in Fig. 4 (C). In other words, the drive support image 70 is seen such that the distance with respect to the right side lane marker is shorter than that with respect to the left side lane marker. With this arrangement, the driver can easily understand that the host vehicle travels at a position in the traveling lane that is closer to the right side lane marker.

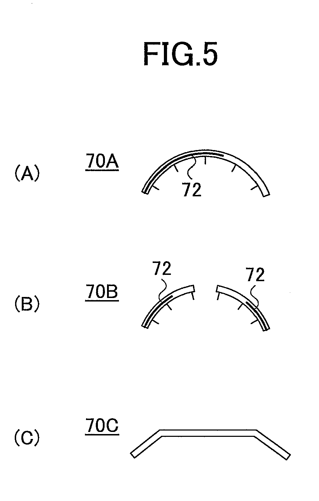

Fig. 5 is a diagram illustrating variations of the drive support image 70. It is noted that, only for the explanation of Fig. 5, the variations of the drive support image 7 are referred to as "drive support images 70A, 70B and 70C".

In the example illustrated in Fig. 5 (A), a drive support image 70A includes an arc-shaped gauge image. In other words, the drive support image 70A includes a meter that indicates an amount of a predetermined parameter. The predetermined parameter is arbitrary. For example, the predetermined parameter may be selected from the vehicle speed, various temperatures, an oil amount, a water amount, a fuel amount, a generated electricity amount, a charged amount, an ecology drive degree, etc. It is noted that, in the case of the gauge image, the drive support image 70A may include a numeral display, etc., in the meter. Further, in the case of the gauge image, the drive support image 70A may include a state image 72 that indicates the current amount of the predetermined parameter such that the state image 72 is associated with the meter. In the example illustrated in Fig. 5 (A), the state image 72 is rendered (superimposed) in the arc of the drive support image 70A. In this case, the state image 72 may be rendered with a color that is different from a color in the arc of the drive support image 70A. It is noted that the state image 72 may be rendered such that the state image 72 is offset from the arc of the drive support image 70A.

If the drive support image 70A includes the state image 72, it is preferred that the shape of the drive support image 70A except for the state image 72 is symmetric with respect to the center thereof in the left/right direction. In this sense, it is preferred that the shape of the drive support image 70A is "substantially" symmetric with respect to the center thereof in the left/right direction.

In the example illustrated in Fig. 5 (B), a drive support image 70B includes arc-shaped gauge images that have a separation at the center therebetween in the left/right direction. The drive support image 70B includes a meter that indicates the amount of the predetermined parameter, as illustrated in Fig. 5 (B). In the example illustrated in Fig. 5 (B), the left and right arc-shaped gauge images of the drive support image 70B includes respective meters that indicate respective amounts of the predetermined parameters. However, a combination of the left and right arc-shaped gauge images may form a single meter. Further, the drive support image 70B may include a state image 72 that indicates the current amount of the predetermined parameter such that the state image 72 is associated with the meter. Further, the drive support image 70B may include a numeral display, etc., in the meter. Further, it is preferred that the shape of the drive support image 70B is "substantially" symmetric (symmetric expect for the state image 72) with respect to the center thereof in the left/right direction.

According to the examples illustrated in Fig. 5 (A) and Fig. 5 (B), the drive support image 70A and 70B can implement the support function described above that enables the driver to acquire an appropriate sense of the width of the vehicle as well as the function as the gauge image. With this arrangement, it becomes possible to use limited space to effectively transmit more information to the driver. However, in the example illustrated in Fig. 5 (B), the drive support image 70B may be a simple mark that does not include the meters.

In the example illustrated in Fig. 5 (C), the drive support image 70C has a shape obtained by removing a lower base from a trapezoid shape whose lower base is longer than an upper base. The drive support image 70C illustrated in Fig. 5 (C) is a simple mark that does not include the meter; however, the drive support image 70C may also include the meter that indicates the amount of the predetermined parameter. Further, the drive support image 70C illustrated in Fig. 5 (C) is a single image without space in the left/right direction; however, as is the case with Fig. 5 (B), the drive support image 70C may have a separation at the center in the left/right direction.

It is noted that the drive support images 70A, 70B and 70C each have the upwardly convex shapes as a whole. In the example illustrated in Fig. 5 (C), the drive support image 70C is based on the trapezoid shape whose lower base is longer than the upper base, and thus is upwardly convex. It is noted that the shape of the drive support image 70C may be other than the trapezoid shape, as long as it is upwardly convex (i.e., the shape is configured such that the width becomes narrower as the position thereof moves upwardly). Further, in the example illustrated in Fig. 5 (C), the shape of the drive support image 70C is the trapezoid shape without the lower base thereof; however, the shape of the drive support image 70C may have the lower base.

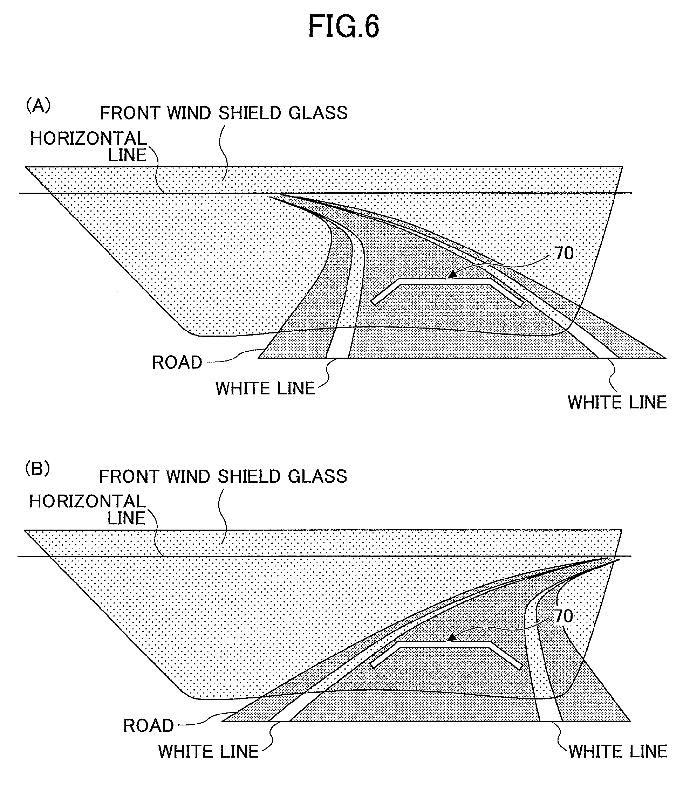

Fig. 6 is a diagram schematically illustrating an example of the drive support image 70 for a curved road. In Fig. 6, (A) illustrates an example of the displayed state of the drive support image 70 for the left curved road, and (B) illustrates an example of the displayed state of the drive support image 70 for the right curved road. Similarly, Fig. 6 illustrates the displayed state of the drive support image 70 from the predetermined view point. In the example illustrated in Fig. 6, the drive support image 70 is a gauge image that has a shape obtained by removing the lower base from the trapezoid shape whose lower base is longer than the upper base.

Since the drive support image 70 has the shape that is upwardly convex, as illustrated in Fig. 6, the drive support image 70 is easily adapted to the curved road. In other words, it is difficult for the drive support image 70 with the upwardly convex shape to intersect with the lane markers (white lines, for example) of the curved road, which enables keeping the visibility of the drive support image 70 (understandability of the information thereof). This holds true for the left curved road as well as the right curved road.

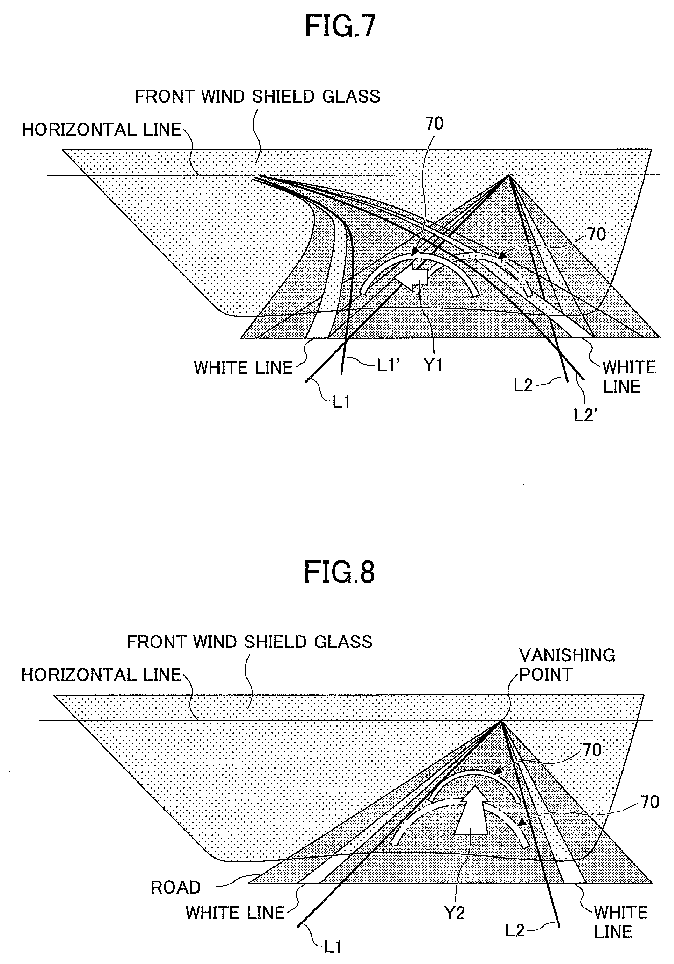

Fig. 7 is a diagram schematically illustrating an example of the displayed state (movement manner) of the drive support image 70 according to a steering angle. Similarly, Fig. 7 illustrates the displayed state of the drive support image 70 from the predetermined view point. It is noted that the two left and right lines L1' and L2' are neither actual images nor displayed images, and are illustrated for the purpose of explanation, as is the case with the lines L1 and L2. It is noted that the two left and right lines L1' and L2' indicate the width of the vehicle and substantially correspond to trajectories (predicted trajectories) of left and right wheels of the vehicle, as is the case with the lines L1 and L2.

Preferably, the drive support image 70 is moved in the left/right direction according to a change in the traveling direction of the host vehicle (steering angle). Specifically, it is preferred that the drive support image 70 is moved in the left/right direction with respect to the displayed position thereof in the case where the host vehicle travels in the straight line on the straight road, according to a difference between the lines L1 and L2 in the case where the host vehicle travels in the straight line on the straight road and the lines L1' and L2' in the case where the host vehicle travels on the curved road.

In the example illustrated in Fig. 7, the output position of the drive support image 70 in the case where the host vehicle travels on the left curved road is moved by a predetermined amount Y1 in the left direction with respect to the output position (alternate long and short dashed line) of the drive support image 70 where the host vehicle travels in the straight line on the straight road. In this case, the drive support image 70 may be inclined with respect to the horizontal line; however, it is preferred that the drive support image 70 is moved by a predetermined amount Y1 in the left direction without inclination with respect to the horizontal line. The predetermined amount Y1 may be determined based on the steering angle information from the steering sensor 30. More specifically, the driver operates the steering wheel according to the curvature radius of the traveling road, and thus the lines L1 and L2 are varied according to the steering operation (In the example illustrated in Fig. 7, the lines L1 and L2 are changed to the lines L1' and L2'). Thus, the output position of the drive support image 70 in the left/right direction (i.e., the projected position on the front wind shield glass in the left/right direction) is changed according to the steering operation. It is noted that the drive support image 70 may not have different shapes before and after the change of the output position of the drive support image 70 in the left/right direction; however, the change of the output position of the drive support image 70 in the left/right direction may involve a slight change of the shape of the drive support image 70.

The relationship between the steering angle and the output position of the drive support image 70 (i.e., the predetermined amount Y1) can be generated in advance based on the drawing data (the relationship between the predicted trajectories of the left and right wheels according to the steering angle and the predetermined view point, for example) on the CAD tool, for example. Thus, the output positions of the drive support image 70 in the left/right direction may be mapped with a plurality of steering angles and stored. In this case, the output position of the drive support image 70 in the left/right direction may be determined according to the steering angle. It is noted that the output position of the drive support image 70 in the left/right direction for steering angles (that are not defined in the mapped data) between the mapped steering angles may be derived with interpolation or the like.

It is noted that the output position of the drive support image 70 in the left/right direction finally determines positions of pixels that generate the display light related to the drive support image 70, and thus the mapped data between the steering angles and the image signals may be stored.

The drive support image 70 may be moved in the left/right direction based on a lane mark recognition result by an image sensor including a camera, instead of the steering angle information. In this case, the lane marks (white lines, bots dots, cat's eyes, etc.) on the left and right sides may be recognized from the camera image, a shift between a center line of the lane marks on the left and right sides and a center line on the camera (i.e., a center line of the vehicle in the front/back direction) is calculated, and the output position of the drive support image 70 in the left/right direction (i.e., the projected position on the front wind shield glass in the left/right direction) may be determined according to the calculated shift.

According to the example illustrated in Fig. 7, since the drive support image 70 is moved according to the change (i.e., the steering angle) in the traveling direction of the host vehicle, a support function of the drive support image 70 can be effective even during the traveling on the curved road or the like. With this arrangement, during the traveling on the curved road or the like, the driver can easily perform an appropriate steering operation while viewing the drive support image 70.

In the example illustrated in Fig. 7, it is necessary to move the output of the drive support image 70 in the left/right direction, and such a movement may be implemented by changing output pixels of the display device 42 (i.e., the pixel positions that generate the display light related to the drive support image 70) in the left/right direction. For this reason, the display device 42 may be configured such that the display device 42 has a sufficient size (i.e., a display light output area) in the left/right direction. Alternatively, such a movement may be mechanically implemented by moving the position of the display device 42 in the left/right direction.

Fig. 8 is a diagram schematically illustrating an example of the displayed state (movement manner) of the drive support image 70 according to the vehicle speed. Similarly, Fig. 8 illustrates the displayed state of the drive support image 70 from the predetermined view point.

Preferably, the drive support image 70 is moved in the up/down direction according to the vehicle speed of the host vehicle. In this case, the drive support image 70 is moved upward as the vehicle speed becomes greater. In the example illustrated in Fig. 8, the displayed state of the drive support image 70 in the case where the vehicle travels in a straight line on the straight road is illustrated. In the example illustrated in Fig. 8, the drive support image 70 may be moved upward by a predetermined amount Y2 from a reference position when the vehicle speed is increased. In this case, the drive support image 70 is moved upward by the predetermined amount Y2 without inclination with respect to the horizontal line. The predetermined amount Y2 may be determined based on the vehicle speed information from the vehicle speed sensor 32. The relationship between the vehicle speed and the output position of the drive support image 70 (i.e., the pixel positions that generate the display light related to the drive support image 70) in the up/down direction can be generated in advance based on the drawing data (the relationship between the predicted trajectories of the left and right wheels and a direction of a line of sight of the driver from the predetermined view point that changes according to the vehicle speed, for example) on the CAD tool, for example. Thus, the output positions of the drive support image 70 in the up/down direction may be mapped with a plurality of vehicle speeds and stored. In this case, the output position of the drive support image 70 in the up/down direction (i.e., the projected position on the front wind shield glass in the up/down direction) may be determined according to the vehicle speed. It is noted that the output position of the drive support image 70 in the up/down direction for vehicle speeds (that are not defined in the mapped data) between the mapped vehicle speeds may be derived with interpolation or the like.

Further, preferably, the drive support image 70 has the width (i.e., the lateral width) increased in the left/right direction when the drive support image 70 is moved in the up/down direction according to the vehicle speed of the host vehicle. Specifically, the lateral width W (not illustrated) of the drive support image 70 is increased or decreased according to the vehicle speed of the host vehicle. This is because a distance between the left and right lines L1 and L2 (i.e., a distance in the left/right direction) becomes shorter as the position becomes farther. It is noted that increasing or decreasing the lateral width of the drive support image 70 may be implemented by zooming in or out the drive support image 70 itself, or by merely increasing or decreasing the lateral width thereof. Further, a convex degree of the drive support image 70 may be varied according to the movement of the drive support image 70 in the up/down direction. In this case, the convex degree of the drive support image 70 may be varied such that the convex degree (i.e., a degree of a sharpness) becomes greater as the position moves upward. Similarly, a relationship between the vehicle speed and the lateral width W of the drive support image 70 can be generated in advance based on the drawing data on the CAD tool. Thus, the lateral widths W of the drive support image 70 (i.e., the pixel positions that generate the display light related to the drive support image 70) may be mapped with a plurality of vehicle speeds and stored. In this case, the lateral width W of the drive support image 70 (i.e., a projected width on the front wind shield glass) may be determined according to the vehicle speed. It is noted that the lateral width W of the drive support image 70 for vehicle speeds (that are not defined in the mapped data) between the mapped vehicle speeds may be derived with interpolation or the like.

It is noted that the output position in the up/down direction of the drive support image 70, the lateral width W of the drive support image 70, etc., finally determine positions of pixels that generate the display light related to the drive support image 70, and thus the mapped data between the vehicle speeds and the image signals may be stored.

According to the example illustrated in Fig. 8, since the drive support image 70 is moved in the up/down direction according to the vehicle speed of the host vehicle, it becomes possible to output the drive support image 70 at a position adapted to a line of sight that changes according to the vehicle speed. Specifically, the line of sight of the driver moves farther as the vehicle speed becomes greater; however, since the drive support image 70 is moved upward according to the movement of a line of sight of the driver, the support function of the drive support image 70 can be maintained even when the vehicle speed changes. With this arrangement, the driver can easily perform an appropriate steering operation while viewing the drive support image 70 without changing a line of sight even when the vehicle speed changes.

Further, according to the example illustrated in Fig. 8, the lateral width of the drive support image 70 is changed according to the vehicle speed of the host vehicle, the problem due to the movement of the drive support image 70 in the up/down direction (i.e., the problem that the drive support image 70 is not output such that the drive support image 70 indicates the width of the vehicle) can be prevented. Specifically, according to the example illustrated in Fig. 8, the vehicle width transmission function of the drive support image 70 can be maintained even when the drive support image 70 is moved in the up/down direction due to the change of the vehicle speed.

In the example illustrated in Fig. 8, it is necessary to move the output of the drive support image 70 in the up/down direction, and such a movement may be implemented by changing output pixels of the display device 42 (i.e., the pixel positions that generate the display light related to the drive support image 70) in the up/down direction. For this reason, the display device 42 may be configured such that the display device 42 has a sufficient size in the up/down direction (i.e., the front/back direction of the vehicle). Alternatively, such a movement may be mechanically implemented by moving the position of the display device 42 such that a distance (i.e., an optical path length) from the display device 42 to the image projection surface of the front wind shield glass is changed.

Further, in the example illustrated in Fig. 8, it is necessary to change the output width of the drive support image 70, and such a change may be implemented by changing output pixels of the display device 42 (i.e., the pixel positions that generate the display light related to the drive support image 70) in the up/down direction. For this reason, the display device 42 may be configured such that the display device 42 has a sufficient size (i.e., the display light output area) in the left/right direction.

It is noted that the example illustrated in Fig. 8 can be combined with the example illustrated in Fig. 7 described above. In this case, a relationship between the steering angle, the vehicle speed and the image signal is mapped in advance as a three-dimensional map, and the image signal may be output according to the steering angle and the vehicle speed. It is noted that the image signal generates the display light related to the drive support image 70, and determines the output position and the lateral width of the drive support image 70.

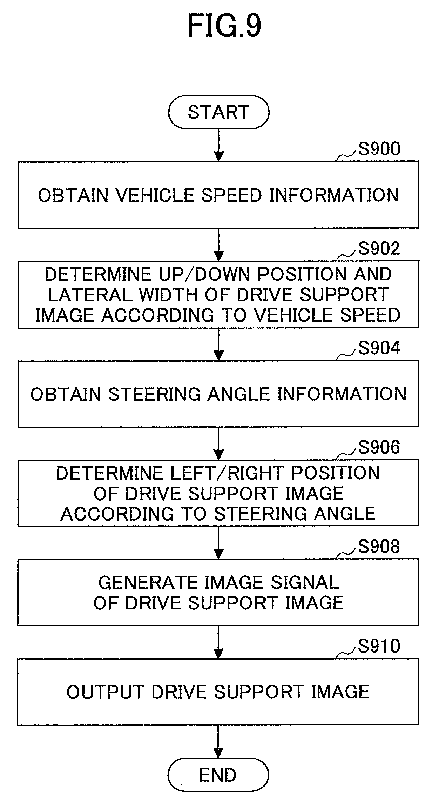

Fig. 9 is an example of a flowchart of a process executed by the ECU 12. The process routine illustrated in Fig. 9 may be performed repeatedly every predetermined cycle during the ON state of the head-up display apparatus 10.

In step S900, the vehicle speed information related to the latest vehicle speed is obtained.

In step S902, the output position of the drive support image 70 in the up/down direction and the lateral width of the drive support image 70 according to the vehicle speed is determined based on the vehicle speed information obtained in step S900 (see Fig. 8).

In step 904, the steering angle information related to the latest steering angle is obtained.

In step S906, the output position of the drive support image 70 in the left/right direction according to the steering angle is determined based on the steering angle information obtained in step S904 (see Fig. 7).

In step S908, the image signal related to the drive support image 70 is generated based on the determination results of step S902 and step S904 described above. It is noted that, in the case where the three-dimensional map is stored that represents the relationship between the steering angle, the vehicle speed and the image signal, the image signal is generated according to the vehicle speed and the steering angle obtained in step S900 and step S904 described above. In the case of the drive support image 70 being the gauge image, the state image 72 of the drive support image 70 may be generated according to the current amount of the parameter (see Fig. 3 (A), etc.).

In step S910, the image signal generated in step S908 is transmitted to the HUD unit 40 and the drive support image 70 is output via the HUD unit 40.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiment(s) of the present inventions have been described in detail, it should be understood that the various changes, substitutions, and alterations could be made hereto without departing from the spirit and scope of the invention. Further, all or part of the components of the embodiments described above can be combined.

For example, according to the embodiment described above, the relationship between the steering angle and the output position of the drive support image 70 in the left/right direction is derived from the drawing data on the CAD tool (the relationship between the predicted trajectories of the left and right wheels according to the steering angle and the predetermined view point, for example) in advance and stored as mapped data. The output position of the drive support image 70 in the left/right direction is determined using the mapped data at the time of performing the control. However, such mapped data may not be stored, and instead of it, the predicted trajectories of the left and right wheels of the vehicle according to the steering angle may be calculated based on the steering angle information at the time of performing the control. In this case, the output position of the drive support image 70 in the left/right direction may be determined according to the calculated predicted trajectories.

Further, according to the embodiment, the manner in which the drive support image 70 is output is determined based on the fixed predetermined view point; however, the manner (i.e., the output position, the lateral width, etc.) in which the drive support image 70 is output may be determined according to the view point of the driver that is detected based on a camera that is installed in a cabin for detecting the view point of the driver. In this case, the manner in which the drive support image 70 is output may be determined according to the idea described above.

## Claims

1. A head-up display apparatus for a vehicle, the head-up display apparatus being configured to output an image whose shape is convex upwardly as a whole such that a width of the image in a left/right direction, when the image is viewed from a predetermined view point, indicates a width of the vehicle.

2. The head-up display apparatus for the vehicle of claim 1, wherein the image includes a meter that indicates an amount of a predetermined parameter.

3. The head-up display apparatus for the vehicle of claim 1 or 2, wherein the head-up display apparatus is configured to vary an output position of the image in the left/right direction based on sensor information, the sensor information representing at least one of a direction of the vehicle, and a position of the vehicle with respect to a lane marker.

4. The head-up display apparatus for the vehicle of claim 3, wherein the head-up display apparatus is configured to determine the output position of the image in the left/right direction such that a center of the image in the left/right direction is on a center line of the vehicle in a front/back direction.

5. The head-up display apparatus for the vehicle of claim 3, wherein the head-up display apparatus is configured to vary the output position of the image in the left/right direction based on steering angle information that represents the direction of the vehicle.

6. The head-up display apparatus for the vehicle of claim 5, wherein the head-up display apparatus is configured to vary the output position of the image in the left/right direction such that the image is between the predicted trajectories of left and right of the vehicle and equally away from the predicted trajectories in the left/right direction, the predicted trajectories being varied according to the steering angle.

7. The head-up display apparatus for the vehicle of any one of claims 1 through 6, wherein the head-up display apparatus is configured to vary the output position of the image in an up/down direction according to a vehicle speed.

8. The head-up display apparatus for the vehicle of any one of claims 1 through 7, wherein the shape of the image includes an arc and convex shape in an upward direction, or a shape obtained by removing a lower base from a trapezoid shape whose lower base is longer than an upper base.

9. The head-up display apparatus for the vehicle of any one of claims 1 through 8, wherein the output position of the image in the left/right direction is varied without an orientation with respect to a horizontal direction being varied.

10. The head-up display apparatus for the vehicle of any one of claims 1 through 9, wherein the shape of the image is substantially symmetric with respect to the center thereof in the left/right direction.

11. The head-up display apparatus for the vehicle of claim 7, wherein the head-up display apparatus is configured to vary a convex degree of the image according to the output position of the image in the up/down direction.
